# EUROPÄISCHE PATENTSCHRIFT

(11) **EP 2 948 661 B1**
(45) Veröffentlichungstag und Bekanntmachung des Hinweises auf die Patenterteilung: **28.12.2016**
(21) Anmeldenummer: 14701103.5
(22) Anmeldetag: 22.01.2014
(51) Int. Cl.: F02D 9/02, F16K 31/04

(54) **RÜCKSTELLEINHEIT, INSBESONDERE FÜR EINE BRENNKRAFTMASCHINE**
RESTORING UNIT, PARTICULARLY FOR AN INTERNAL COMBUSTION ENGINE
UNITÉ DE RAPPEL DESTINÉE EN PARTICULIER À UN MOTEUR À COMBUSTION INTERNE

(30) Priorität: 24.01.2013 DE 102013201170
(43) Veröffentlichungstag der Anmeldung: 02.12.2015
(73) Patentinhaber: Mahle International GmbH, 70376 Stuttgart (DE)
(72) Erfinder: MAYER, Burkhardt, 71334 Waiblingen (DE)
(74) Vertreter: BRP Renaud & Partner mbB Rechtsanwälte Patentanwälte Steuerberater
(86) Internationale Anmeldenummer: PCT/EP2014/051235
(87) Internationale Veröffentlichungsnummer: WO 2014/114667

(56) Entgegenhaltungen:
- DE-A1- 10 037 461
- DE-A1- 10 043 001
- DE-A1- 10 209 052
- US-A- 5 368 283
- "AIR CONTROL VALVE THROTTLE BODY", RESEARCH DISCLOSURE, MASON PUBLICATIONS, HAMPSHIRE, GB, Nr. 412, 1. August 1998 (1998-08-01), Seite 1021, XP000824811, ISSN: 0374-4353

## Beschreibung

Die vorliegende Erfindung betrifft eine Rückstelleinheit, insbesondere für eine Brennkraftmaschine eines Kraftfahrzeugs, sowie eine Brennkraftmaschine mit einer solchen Rückstelleinheit.

Herkömmliche Rückstelleinheiten kommen beispielsweise in Ansaugvorrichtungen von Brennkraftmaschinen für Kraftfahrzeugen oder in Abgasturboladern von Kraftfahrzeugen zum Einsatz, wenn mittels einer drehbaren Klappe eine Ansaugöffnung oder ein Wastegate-Bypass im Abgasturbolader wahlweise geöffnet oder verschlossen werden soll. Eine derartige Klappenvorrichtung kann mittels einer Antriebseinheit, beispielsweise einem Elektromotor o.ä., angesteuert werden. Für den Fall, dass die Antriebseinheit nicht aktiv ist, ist es häufig wünschenswert, dass die Klappe der Klappenvorrichtung automatisch in eine vorbestimmte Position, in welcher die Ansaugvorrichtung bzw. das Bypassventil beispielsweise verschlossen ist, bewegt wird. Beispielsweise lässt sich auf diese Weise im Sinne des sog. "fail-safe"-Prinzips verhindern, dass die Klappe der Klappenvorrichtung bei einer Fehlfunktion oder einem Ausfall der Antriebseinheit einen undefinierten Zustand einnimmt.

Die DE 10 2010 020 579 A1 beschreibt ein pneumatisches Stellelement mit einem Gehäuse, dessen Innenvolumen von einer Membran in eine erste und zweite Kammer geteilt wird. Die Membranen sind radial außen lagefixiert und innen an einem axial beweglichen im Gehäuse geführten Stößel lagefixiert. Der Stößel ist bei einem ungleichen Druck zwischen den beiden Kammern axial verschiebbar. In einer der beiden Kammern ist in axialer Richtung des Stößels ein Federelement angeordnet und beidseitig abgestützt. Dieses Federelement dient zur Rückstellung des Stößels in eine vorbestimmte Ausgangsposition.

Weitere Stellelemente mit Rückstelleinheiten sind aus der DE 102 09 052 A1 und der US 5,368,283 bekannt geworden.

Die vorliegende Erfindung beschäftigt sich mit dem Problem, eine verbesserte Ausführungsform für eine Rückstelleinheit anzugeben, welche sich durch einen einfachen mechanischen Aufbau, insbesondere mit einer geringen Anzahl an Bauteilen, auszeichnet.

Dieses Problem wird gelöst durch den Gegenstand des unabhängigen Patentanspruchs. Bevorzugte Ausführungsformen sind Gegenstand der abhängigen Ansprüche.

Grundgedanke der Erfindung ist demnach, eine Rückstelleinheit der eingangs genannten Art aus nur drei Bauteilen auszubilden. Die erfindungsgemäße Rückstelleinheit umfasst eine Rückstell-Konsole, welche einen im Wesentlichen zylindrisch ausgebildeten Lagerdom aufweist. Des Weiteren umfasst die Rückstelleinheit als zweites Bauteil eine erste Lagereinheit, die eine erste Aufnahmeöffnung aufweist, in welche der Lagerdom drehbar einsetzbar oder eingesetzt ist. Schließlich umfasst die Rückstelleinheit als drittes Bauteil ein Federelement, welches wenigstens teilweise auf einer Außenumfangsfläche des Lagerdoms angeordnet ist und welches die Rückstell-Konsole gegen die erste Lagereinheit vorspannt. Am Lagerdom kann, wie im Folgenden noch genauer erläutert werden wird, auf geeignete Weise eine Klappenvorrichtung, beispielsweise eines Ansaugmoduls einer Brennkraftmaschine, drehfest angebracht sein, so dass durch ein Drehen der Rückstell-Konsole einschließlich des Lagerdoms die Klappenvorrichtung gedreht werden kann. Auf diese Weise kann ein effektiver Öffnungsquerschnitt einer Ansaugöffnung, welche mit der Klappenvorrichtung verschließbar ist, eingestellt werden.

Zum Drehen des Lagerdoms kann dieser beispielsweise mit der Antriebseinheit antriebsverbunden sein. Hierfür kann beispielsweise eine Antriebswelle des Elektromotors drehfest mit dem Lagerdom der Rückstell-Konsole verbunden sein.

Für den Fall, dass von der Antriebseinheit kein Drehmoment auf die RückstellKonsole ausgeübt wird, befindet sich die Rückstell-Konsole aufgrund der vom Federelement erzeugten Vorspannung in einer ersten vorbestimmten Position. Mittels eines an der Lagereinheit an geeigneter Stelle vorgesehenen mechanischen Anschlags kann die Rückstell-Konsole somit auf einfache Weise in der ersten vorbestimmten Position gehalten werden, wenn die Rückstell-Konsole mittels des Federelements gegen diesen an der Lagereinheit vorgesehenen Anschlag gedrückt wird.

Vorzugsweise kann diese erste vorbestimmte Position gleichzeitig einer Position der an dem Lagerdom angebrachten Klappe entsprechen, in welcher diese eine Ansaugöffnung des Ansaugmoduls vollständig verschließt. Dies bedeutet, dass mittels der erfindungsgemäßen Rückstelleinheit eine solche Ansaugvorrichtung beispielsweise bei Ausfall der Aktuator automatisch verschlossen wird. Somit wird vermieden, dass sich die Rückstell-Konsole bei einem Ausfall des Aktuators in einer undefinierten Position befindet.

Zum Drehen der Rückstell-Konsole der ersten vorbestimmten Position weg kann mittels der Antriebseinheit ein der Federkraft des Federelements entgegenwirkendes Antriebsdrehmoment erzeugt werden. Je nach Größe des von der Antriebseinheit aufgebrachten Drehmoments kann somit eine von der ersten vorbestimmten Position abweichende (Gleichgewichts-)Position der Rückstell-Konsole eingestellt werden. Im Falle eines gezielten Ausschaltens der Antriebseinheit bzw. im Falle einer Funktionsstörung der Antriebseinheit und einem damit verbundenen Verschwinden des Antriebsdrehmoments wird die Rückstell-Konsole aufgrund der Vorspannung des Federelements automatisch wieder in die erste vorbestimmte Position zurückbewegt.

Da die erfindungsgemäße Rückstelleinheit sich im Wesentlichen aus nur drei verschiedenen Bauteilen, nämlich Rückstell-Konsole, Lagereinheit und Federelement zusammensetzt, kann sie auf einfache und somit kostengünstige Weise hergestellt werden. Aufgrund der geringen Anzahl an Bauteilen weist die erfindungsgemäße Rückstelleinheit zudem eine besonders hohe Betriebssicherheit auf und ist daher besonders für die Verwendung in einer Brennkraftmaschine oder in einem Abgasturbolader eines Kraftfahrzeugs geeignet. Der Lagerdom der Rückstell-Konsole ist mittels einer Clipverbindung lösbar in die erste Aufnahmeöffnung einsetzbar oder eingesetzt. Dies ermöglicht eine besonders einfache Montage der Rückstelleinheit, nachdem das Federelement auf den Lagerdom der RückstellKonsole aufgesetzt bzw. aufgesteckt worden ist. Die Verwendung einer Clipverbindung ermöglicht eine bezüglich einer Axialrichtung des Lagerdoms mechanisch stabile Fixierung der Rückstell-Konsole an der Lagereinheit, wobei die Verbindung bei Bedarf, beispielsweise zu Wartungszwecken o.ä., auf einfache Weise wieder gelöst werden kann. Hierzu weist die Clipsverbindung der erfindungsgemäßen Rückstelleinheit an einem der beiden Fügepartner bewegbare Elemente und an dem anderen Fügepartner eine Aufnahme auf. Vorzugsweise sind dabei das bewegbare Element an der Rückstell-Konsole und die Aufnahme an der ersten Lagereinheit angeordnet. Die Aufnahme kann als Schulter ausgebildet sein, welche von dem bewegbaren Element vorzugsweise in axialer und radialer Richtung umgriffen wird.

Die Clipsverbindung umfasst weiterhin einen radialen Durchgangsschlitz, der auf einer der ersten Aufnahmeöffnung zugewandten ersten Stirnseite des Lagerdoms vorgesehen ist. Mittels eines derartigen radialen Durchgangsschlitzes lässt sich die Clipsverbindung auf besonders einfache Weise realisieren.

Der Lagerdom der erfindungsgemäßen Rückstell-Konsole verfügt zusätzlich zu der Außenumfangsfläche über eine Konsolenlagerfläche. Dabei kann die Konsolenlagerfläche in axialer Richtung direkt oder indirekt an die Außenumfangsfläche anschließen. Besagte Konsolenlagerfläche kann dabei eine Mantelfläche eines Zylinders mit kreisförmigem Querschnitt ausbilden. Die Außenumfangsfläche kann ebenfalls einen Zylinder mit kreisförmigem Querschnitt umschließen. Alternativ dazu kann die Außenumfangsfläche jedoch auch einen Zylinder mit einem polygonen Querschnitt, insbesondere mit einem fünf- oder sechseckigen Querschnitt, umschließen. Mittels der Konsolenlagerfläche wird die erfindungsgemäße Rückstell-Konsole drehbar innerhalb der ersten Aufnahmeöffnung der ersten Lagereinheit gelagert.

In einer bevorzugten Ausführungsform ist im montierten Zustand der RückstellKonsole die erste Lagereinheit zwischen der Clipsverbindung und dem Federelement angeordnet. Weiterhin ist das Federelement in axialer Richtung durch Kompression vorgespannt, wobei beide axialen Enden des Federelements an den benachbarten Bauteilen anliegen. Somit ist die Rückstell-Konsole durch das Federelement in axialer Richtung spielfrei in der ersten Lagereinheit gehalten.

Gemäß einer weiteren vorteilhaften Ausgestaltung der Erfindung ist der Durchgangsschlitz im Bereich der Konsolenlagerfläche angeordnet. Somit bildet der Lagerbereich der Rückstell-Konsole gleichzeitig den Befestigungsbereich aus.

Bei einer Weiterbildung der Erfindung ist zwischen der Konsolenlagerfläche und der Außenumfangsfläche ein ringförmig ausgebildeter Anschlag angeordnet, der das Eindringen des Lagerdoms in die erste Aufnahmeöffnung begrenzt. Somit kann die Rückstell-Konsole nicht zu tief in die Aufnahmeöffnung eingesteckt werden, wodurch eine Beschädigung des Federelements verhindert wird. Der Anschlag ist hierbei so angeordnet, dass die federnden Elemente der Clipsverbindung in die Arretierungsstellung federn können. Vorzugsweise ist die axiale Länge der Konsolenlagerfläche, zwischen dem Anschlag und dem bewegbaren Teil der Clipsverbindung, etwas größer, als die axiale Länge der ersten Aufnahmeöffnung. Somit kann die Rückstell-Konsole etwas weiter in die Aufnahmeöffnung gedrückt werden, wodurch der bewegbare Teil der Clipsverbindung sicher an dem Gegenstück einzurasten vermag.

In einer vorteilhaften Weiterbildung kann der Durchgangsschlitz ein Rastelement, insbesondere eine Rastnase, zum lösbaren Befestigen der Rückstell-Konsole in der ersten Aufnahmeöffnung umfassen. Mittels einer derartigen Rastnase kann die Rückstell-Konsole, falls erforderlich, besonders einfach wieder von der Lagereinheit gelöst werden.

Für die Verwendung der erfindungsgemäßen Rückstelleinheit in einer Brennkraftmaschine oder in einem Abgasturbolader, beispielsweise um eine Ansaugöffnung eines Ansaugmoduls der Brennkraftmaschine oder einen Bypass-Kanal einer Wastegate-Einrichtung mittels eines Klappenmechanismus zu öffnen bzw. zu verschließen, kann in dem Lagerdom eine Drehwellen-Durchgangsöffnung vorgesehen sein, in welche eine Drehwelle zum drehfesten Verbinden der Rückstellkonsole mit einer Klappenvorrichtung zumindest teilweise und drehbar aufnehmbar oder aufgenommen ist. Vorzugsweise erstreckt sich die DrehwellenDurchgangs-öffnung in einer axialen Richtung des Lagerdoms.

In die Drehwellen-Durchgangsöffnung kann eine Drehwelle formschlüssig eingesetzt und drehfest mit der Rückstell-Konsole verbunden werden. Ein Drehen der Rückstell-Konsole bzw. des Lagerdoms hat dann automatisch auch eine entsprechende Drehbewegung einer mit der Drehwelle verbundenen Klappe zur Folge. Vorzugsweise ist die Klappenvorrichtung mittels der Drehwelle derart verbunden, dass die Klappenvorrichtung die Öffnung des Ansaugmoduls vollständig verschließt, wenn sich die Rückstell-Konsole in der ersten vorbestimmten Position befindet.

In einer besonders einfach und somit kostengünstig herzustellenden Ausführungsform kann die Drehwellen-Durchgangsöffnung als Innenvierkant-Öffnung ausgebildet sein. Selbstverständlich sind aber auch andere geometrische Ausgestaltungen vorstellbar, welche eine drehfeste Befestigung der Drehwelle am Lagerdom erlauben.

Um die zur Vorspannung der Rückstell-Konsole gegen die erste Lagereinheit erforderliche Rückstellkraft aufzubringen, kann das Federelement als elastische Torsionsfeder ausgebildet sein, die sich in einem in der Rückstelleinheit montierten Zustand mit einem ersten Endabschnitt an einem an der ersten Lagereinheit vorgesehenen ersten Anschlagabschnitt und mit einem zweiten Endabschnitt an einem am Lagerdom vorgesehenen zweiten Anschlag abstützen kann. Um eine unerwünschte Bewegung der Torsionsfeder entlang der axialen Richtung des Lagerdoms zu verhindern, kann an der ersten Lagereinheit eine Aufnahmenut vorgesehen sein, in welche der ersten Endabschnitt der Torsionsfeder zur axialen Fixierung wenigstens teilweise aufnehmbar oder aufgenommen ist.

In einer besonders bevorzugten Ausführungsform kann der zweite Anschlag als ein in der axialen Richtung der Rückstellkonsole vom Lagerdom abstehender Fortsatz ausgebildet sein. Dies ermöglicht eine besonders einfache Montage des Federelements bzw. der federelastischen Torsionsfeder auf dem Lagerdom. Hierzu muss das Federelement lediglich auf den Lagerdom aufgesteckt werden und der zweite Endabschnitt der Torsionsfeder an dem vom Lagerdom abstehenden Fortsatz zur Anlage gebracht werden. Beim Einsetzen des Lagerdoms in die Aufnahmeöffnung der Lagereinheit wird der erste Endabschnitt der Torsionsfeder in die Aufnahmenut gedrückt und auf diese Weise die erfindungsgemäße Vorspannung auf die Rückstell-Konsole erzeugt.

In einer weiterbildenden Ausführungsform kann an der ersten Lagereinheit eine Schutzwand vorgesehen sein, welche in einem in einer Brennkraftmaschine montierten Zustand der Rückstelleinheit für diese als Auffangvorrichtung für im Falle einer Funktions-Störung von der Rückstelleinheit abfallende Teile wirkt. Auf diese Weise kann für den Fall, dass fehlerbedingt von der Rückstelleinheit abfallende Teile der Rückstelleinheit zu einer Beschädigung des die Rückstelleinheit verwendenden Ansaugmoduls bzw. der dieses Ansaugmodul verwendenden Brennkraftmaschine führt.

In einer weiterbildenden Ausführungsform kann die Rückstelleinheit auch eine zweite, zusätzliche Lagereinheit aufweisen, welche die Lagereinheit zu einer Lager-Baugruppe ergänzt und welche eine zweite Aufnahmeöffnung zur Aufnahme des Lagerdoms aufweist. Gemäß dieser Ausführungsform ist der Lagerdom in einem montierten Zustand im Bereich seiner ersten Stirnseite in die erste Aufnahmeöffnung der Lagereinheit eingesetzt. Im Bereich seiner zweiten Stirnseite ist der Lagerdom in die zweite Aufnahmeöffnung eingesetzt, so dass der Lagerdom zwischen der die Lager-Baugruppe ausbildenden ersten und zweiten Lagereinheit eingespannt ist. In diesem Fall ist die Bereitstellung einer Clipverbindung o.ä. zur Befestigung des Lagerdoms in der ersten Aufnahmeöffnung nicht unbedingt erforderlich. Die beiden Lagereinheiten können beispielsweise mittels einer geeigneten Schnappverbindung mechanisch stabil, aber im Bedarfsfall lösbar, miteinander verbunden sein. Mittels der Bereitstellung einer zweiten, zusätzlichen Lagereinheit kann der Lagerdom besonders mechanisch stabil gehalten werden. Dabei bietet es sich an, dass die Drehwelle zum drehfesten Verbinden der Rückstellkonsole mit der Klappenverbindung im Bereich der zweiten Lagereinheit, also an der zweiten Stirnseite des Lagerdoms, in die Drehwellen-Durchgangsöffnung eingesetzt wird.

Die Erfindung betrifft des Weiteren eine Brennkraftmaschine für ein Kraftfahrzeug mit einer Ansaugvorrichtung zum Ansaugen von Luft in eine Brennkammer der Brennkraftmaschine sowie mit einer Rückstelleinheit mit einem oder mehreren der vorhergehend genannten Merkmale. In der Brennkraftmaschine ist eine Klappenvorrichtung drehfest mit dem Lagerdom der Rückstelleinheit verbunden, wobei mittels der Klappenvorrichtung eine Ansaugöffnung der Ansaugvorrichtung zwischen einem geöffneten und einem geschlossenen Zustand umschaltbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße Rückstelleinheit in einem nicht-montierten Zustand,
- Fig. 2: die erfindungsgemäße Rückstelleinheit in einem montierten Zustand,
- Fig. 3: eine Detaildarstellung der Lagereinheit,
- Fig. 4: eine Detaildarstellung der Rückstell-Konsole,
- Fig. 5: eine Variante der Rückstelleinheit der Figur 1 in einem nicht montierten Zustand,
- Fig. 6: die Variante der Figur 5 in einem montierten Zustand.

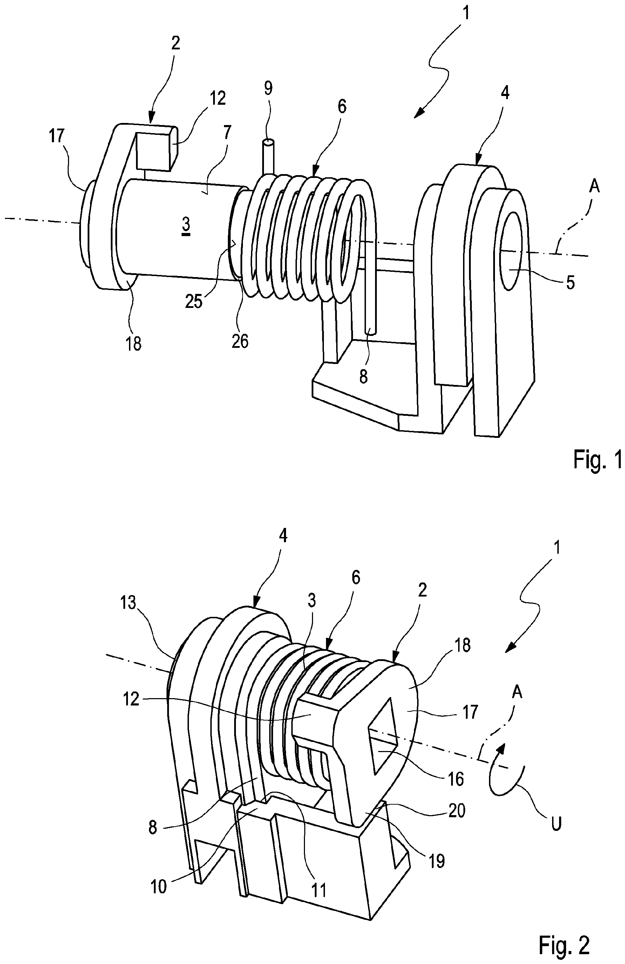

In der Figur 1 ist eine erfindungsgemäße Rückstelleinheit in einem nicht-montierten Zustand dargestellt und mit 1 bezeichnet. Die Figur 2 zeigt die Rückstelleinheit 1 in einem montierten Zustand.

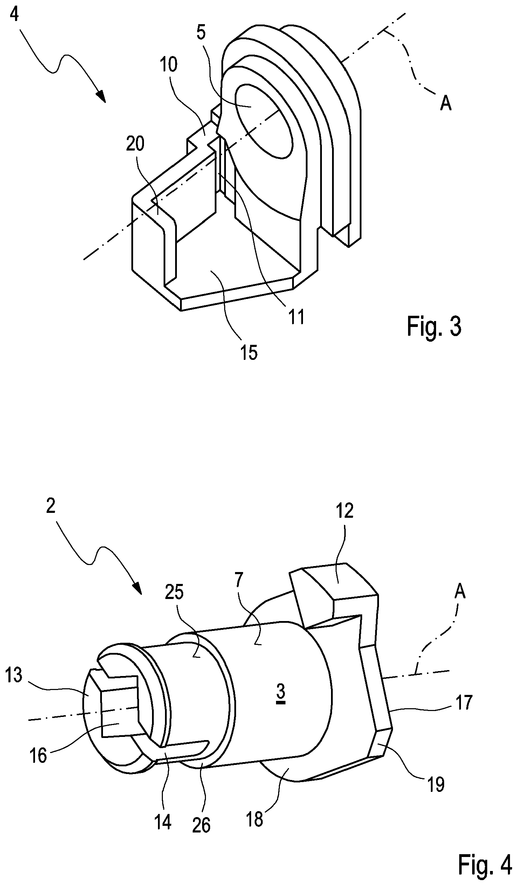

Die Rückstelleinheit 1 umfasst eine Rückstell-Konsole 2 mit einem im Wesentlichen zylindrisch ausgebildeten Lagerdom 3. Die Rückstell-Konsole 2 ist in der Figur 4 als separates Bauteil dargestellt. Die Rückstelleinheit 1 umfasst weiterhin eine erste Lagereinheit 4, die eine erste Aufnahmeöffnung 5 aufweist, in welche der Lagerdom 3 um eine axiale Achse A drehbar eingesetzt ist. Die Rückstelleinheit 1 umfasst auch ein Federelement 6, welches wenigstens teilweise auf einer Außenumfangsfläche 7 des Lagerdoms 3 angeordnet ist. Das Federelement 6 kann als federelastische Torsionsfeder mit einem ersten Endabschnitt 8 und einem zweiten Endabschnitt 9 ausgebildet sein.

Im montierten Zustand kann sich die Torsionsfeder mit dem ersten Endabschnitt 8 in radialer Richtung an einem an der ersten Lagereinheit 4 vorgesehenen ersten Anschlag 10 abstützen. Am ersten Anschlag 10 der ersten Lagereinheit 4 kann eine Aufnahmenut 11 vorgesehen sein, in welche der erste Endabschnitt 8 der Torsionsfeder zur Axialfixierung aufgenommen sein kann, was in der Darstellung der Figur 3 gezeigt ist. Mit dem zweiten Endabschnitt 9 kann sich die Torsionsfeder an einem am Lagerdom 3 vorgesehen zweiten Anschlag 12 (vgl. Fig. 1) abstützen.

Betrachtet man die Darstellung der Figur 4, so erkennt man, dass auf einer im montierten Zustand der ersten Aufnahmeöffnung 5 zugewandten ersten Stirnseite 13 des Lagerdoms 3 ein radialer Durchgangsschlitz 14 vorgesehen sein kann. Der radiale Durchgangsschlitz 14 kann ein Rastelement, insbesondere eine Rastnase, ausbilden, mittels welcher die Rückstell-Konsole 2 lösbar in der ersten Aufnahmeöffnung 5 der ersten Lagereinheit 4 befestigt werden kann. In diesem Fall bilden Durchgangsschlitz 14 und die erste Aufnahmeöffnung 5 eine Art Clipverbindung aus.

Die Rückstell-Konsole verfügt über einen als Konsolenlagerfläche 25 ausgebildeten Bereich, der im Wesentlichen zylinderförmig ausgebildet ist. Zwischen der Konsolenlagerfläche 25 und dem Lagerdom 3 ist weiterhin ein Anschlag 26 angeordnet, der als Ringstufe ausgebildet ist.

Die axiale Länge der Konsolenlagerfläche 25 ist im Beispielszenario der Figuren geringfügig größer als die axiale Ausdehnung der ersten Aufnahmeöffnung 5. Auf diese Weise kann die Rückstell-Konsole 2 sicher in die Aufnahmeöffnung 5 eingesteckt und an der ersten Lagereinheit 4 verrastet werden.

Aus der Darstellung der Figur 3 entnimmt man ferner, dass die erste Lagereinheit 4 eine Schutzwand 15 umfassen kann, welche in einem in einer Brennkraftmaschine montierten Zustand der Rückstelleinheit 1 für diese als Auffangvorrichtung für von der Rückstelleinheit 1 im Falle einer Funktionsstörung abfallende Teile wirken kann. Auf diese Weise soll verhindert werden, dass solche Teile weitere Komponenten der Brennkraftmaschine beschädigen können.

Betrachtet man nun wieder die Darstellung der Figur 2, so erkennt man weiterhin, dass am Lagerdom 3 der Rückstell-Konsole 2 eine Drehwellen-Durchgangsöffnung 16 vorgesehen sein kann, in welche eine (in der Figur 2 der Übersichtlichkeit halber nicht gezeigte) Drehwelle zum drehfesten Verbinden der Rückstellkonsole 2 mit einer Klappen-Vorrichtung zumindest teilweise und drehfest aufnehmbar ist. Die Drehwellen-Durchgangsöffnung 16 kann wie in der Figur 2 gezeigt als Innenvierkant-Öffnung ausgebildet sein. In Varianten sind aber auch zahlreiche andere technische Realisierungsmöglichkeiten vorstellbar, welche eine drehfeste Fixierung der Drehwelle in der Drehwellen-Durchgangsöffnung ermöglichen.

Für den Zusammenbau der Rückstelleinheit 1 wird zunächst das Federelement 6, welches als Torsionsfeder ausgebildet sein kann, auf den Lagerdom 3 der Rückstell-Konsole 2 aufgesteckt. Anschließend wird die Rückstell-Konsole 2 an der ersten Lagereinheit 4 montiert; hierfür wird der Lagerdom 3 in die erste Aufnahmeöffnung 5 der Lagereinheit 4 eingesetzt. Mittels des als Rastelement ausbildenden radialen Durchgangsschlitzes 14 kann der Lagerdom 3 in der Art einer Clipverbindung an der Rückstell-Konsole 2 drehbar fixiert werden.

Nach der Montage wird die Torsionsfeder, die sich mittels des ersten Endabschnitts 8 am ersten Anschlag 10 der ersten Lagereinheit 4 abstützt, und mittels des zweiten Endabschnitts 9, der sich am zweiten Anschlag 12 der Rückstell-Konsole 2 abstützt, vorgespannt.

In dem in der Figur 2 gezeigten, montierten Zustand der Rückstelleinheit 1 ist also die Rückstell-Konsole 2 aufgrund der vom Federelement 6 erzeugten Vorspannkraft gegen die erste Lagereinheit 4 vorgespannt. Ohne Einwirken eines äußeren Drehmoments verbleibt die Rückstell-Konsole 2 folglich in der in der Figur 2 gezeigten Position.

Am Lagerdom 3 kann im Bereich einer zweiten Stirnseite 17 eine radiale Erweiterung 18 vorgesehen sein. Die radiale Erweiterung 18 kann wiederum einen Abstützungsabschnitt 19 aufweisen, welcher sich in der in der Figur 2 gezeigten Position der Rückstell-Konsole 2 an einem an der ersten Lagereinheit 4 vorgesehenen dritten Anschlag 20 abstützt. Mittels des Federelements 6 bewegt sich die Rückstell-Konsole 2 bei nicht vorhandenem äußeren Drehmoment aufgrund der vom Federelement 6 erzeugten Vorspannkraft automatisch in die in der Figur 2 gezeigte erste Position zurück.

Durch eine geeignete Befestigung einer Klappenvorrichtung eines Ansaugmoduls einer Brennkraftmaschine am Lagerdom 3 derart, dass in der in Figur 2 gezeigten Position der Rückstell-Konsole die Klappenvorrichtung eine Ansaugöffnung des Ansaugmoduls verschließt, kann sichergestellt werden, dass ohne Bereitstellung eines äußeren Drehmoments an der Rückstell-Konsole 2 die Ansaugöffnung automatisch verschlossen wird. Zum Öffnen der Klappe kann die Rückstell-Konsole 2 durch Bereitstellung eines äußeren Drehmoments in eine in der Figur 2 mit U bezeichnete Richtung gedreht werden. Hierzu kann der Lagerdom 3 der Rückstell-Konsole 2 beispielsweise mit einem Elektromotor oder einer anderen geeigneten Antriebseinheit antriebsverbunden sein.

Im Beispiel der Figuren 1 bis 4 stützen sich die beiden axialen Enden des Federelementes 6 in montiertem Zustand an der ersten Lagereinheit 4 und an der zweiten Stirnseite 17 der Rückstell-Konsole 2 ab, so dass das Federelement 6 bei montierter Rückstell-Konsole 2 geringfügig komprimiert ist. Somit ist die Rückstell-Konsole 2 in axialer Richtung spielfrei montiert.

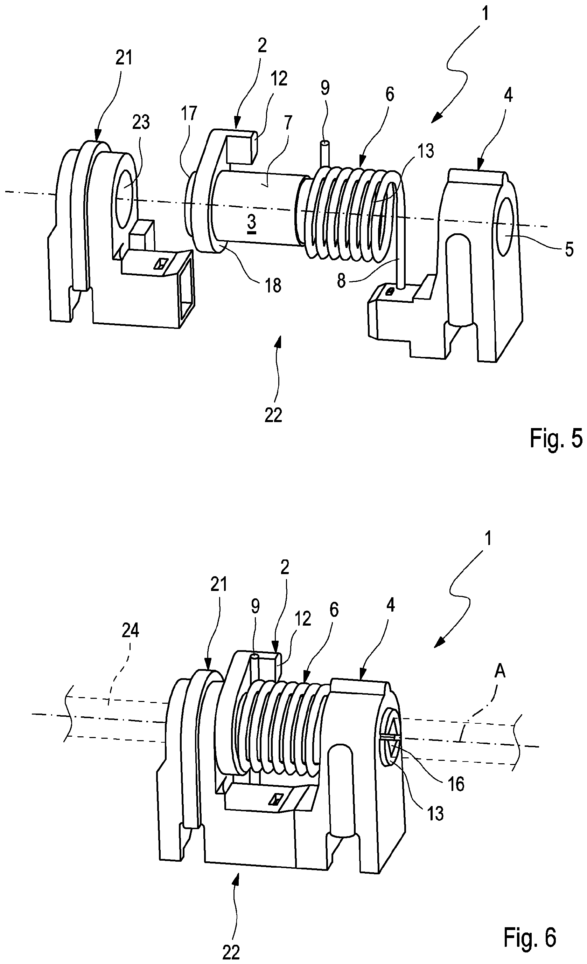

In der Figur 5 ist eine Variante der Rückstelleinheit 1 der Figuren 1 bis 4 dargestellt, mittels welcher die Rückstell-Einheit 1 zusätzlich zur ersten Lagereinheit 4 eine zweite Lagereinheit 21 aufweist, welche die erste Lagereinheit 4 zu einer Lager-Baugruppe 22 ergänzt. Die Figur 5 zeigt die Rückstelleinheit 1 dabei in einem nicht-montierten Zustand, die Figur 6 in einem montierten Zustand, in welchem das Federelement 6 die Rückstell-Konsole 2 gegen die erste Lagereinheit 4 vorspannt. Die Erläuterungen zur Konsolenlagerfläche 25 und zum Anschlag 26 gemäß der Figuren 1 bis 4 gelten selbstverständlich auch für die Variante gemäß der Figuren 4 und 5.

In den in der Figur 6 gezeigten montierten Zustand ist der Lagerdom 3 im Bereich seiner ersten Stirnseite 13 in die erste Aufnahmeöffnung 5 der ersten Lagereinheit 4 eingesetzt und im Bereich seiner zweiten Stirnseite 17 in eine in der zweiten Lagereinheit 21 vorgesehene zweite Aufnahmeöffnung 23 eingesetzt.

Die erste und zweite Aufnahmeöffnung 5, 23 können als Durchgangsöffnungen ausgebildet sein. In dem in der Figur 6 gezeigten montierten Zustand ist die Rückstell-Konsole 2 mit dem Lagerdom 3 zwischen den beiden Lagereinheiten 4, 17 der Lager-Baugruppe 22 eingespannt. Eine Drehwelle 24 kann entweder über die erste Stirnseite 13 oder über die zweite Stirnseite 17 in die Drehwellen-Durchgangsöffnung 16 eingesteckt sein. An der Drehwelle 24 kann, wie bereits erläutert, die Klappe einer Klappenvorrichtung befestigt sein, mittels welcher die Klappenvorrichtung eine Ansaugöffnung des Ansaugmoduls wahlweise öffnet oder verschließt (nicht gezeigt).

Auch beim Beispiel der Figuren 5 und 6 stützen sich die axialen Enden des Federelementes 6 in montiertem Zustand an der ersten Lagereinheit 4 und an der zweiten Stirnseite 17 der Rückstell-Konsole 2 ab, so dass das Federelement 6 bei montierter Rückstell-Konsole 2 geringfügig komprimiert ist. Somit ist die Rückstell-Konsole 2 in axialer Richtung spielfrei montiert.

## Patentansprüche

1. Rückstelleinheit (1), insbesondere für eine Brennkraftmaschine eines Kraftfahrzeugs,
- mit einer einen im Wesentlichen zylindrisch ausgebildeten Lagerdom (3) aufweisenden Rückstell-Konsole (2),
- mit einer ersten Lagereinheit (4), die eine erste Aufnahmeöffnung (5) aufweist, in welche der Lagerdom (3) drehbar eingesetzt ist,
- mit einem Federelement (6), welches wenigstens teilweise auf einer Außenumfangsfläche (7) des Lagerdoms (3) angeordnet ist und welches die Rückstell-Konsole (2) gegen die erste Lagereinheit (4) vorspannt,
- wobei der Lagerdom (3) mittels einer Clipverbindung lösbar in die erste Aufnahmeöffnung (5) eingesetzt ist, und
- wobei die Clipverbindung einen radialen Durchgangsschlitz (14) umfasst, der auf einer der ersten Aufnahmeöffnung (5) zugewandten ersten Stirnseite (13) des Lagerdoms (3) vorgesehen ist,
**dadurch gekennzeichnet, dass**
der Lagerdom (3) über eine Konsolenlagerfläche (25) verfügt, mittels welcher die Rückstell-Konsole (2) innerhalb der ersten Lagereinheit (4) gelagert ist.

2. Rückstelleinheit (1) nach Anspruch 1,
**dadurch gekennzeichnet, dass**
der Durchgangsschlitz (14) im Bereich der Konsolenlagerfläche (25) angeordnet ist.

3. Rückstelleinheit nach einem der vorangehenden Ansprüche,
**dadurch gekennzeichnet, dass**
zwischen der Konsolenlagerfläche (25) und der Außenumfangsfläche (7) ein Anschlag (26) angeordnet ist, welcher das Eindringen des Lagerdoms (3) in die erste Aufnahmeöffnung (5) begrenzt.

4. Rückstelleinheit(1) nach einem der vorangehenden Ansprüche,
**dadurch gekennzeichnet, dass**
der Durchgangsschlitz (14) an der ersten Stirnseite des Lagerdoms ein Rastelement, insbesondere eine Rastnase, zum lösbaren Befestigen der Rückstell-Konsole (2) in der ersten Aufnahmeöffnung (5) umfasst.

5. Rückstelleinheit (1) nach einem der vorhergehenden Ansprüche,
**dadurch gekennzeichnet, dass**
am Lagerdom (3) eine Drehwellen-Durchgangsöffnung (16) vorgesehen ist, in welche eine Drehwelle (24) zum drehfesten Verbinden der Rückstell-Konsole (2) mit einer Klappen-Vorrichtung zumindest teilweise und drehfest aufnehmbar oder aufgenommen ist.

6. Rückstelleinheit (1) nach Anspruch 5,
**dadurch gekennzeichnet, dass**
die Drehwellen-Durchgangsöffnung (16) als Innenvierkant-Öffnung ausgebildet ist.

7. Rückstelleinheit (1) nach einem der vorhergehenden Ansprüche,
**dadurch gekennzeichnet, dass**
das Federelement (6) als federelastische Torsionsfeder ausgebildet ist, die sich in einem in der Rückstelleinheit (1) montierten Zustand mit einem ersten axialen Endabschnitt (8) an einem an der ersten Lagereinheit (4) vorgesehenen ersten Anschlag (10) abstützt und sich mit einem zweiten axialen Endabschnitt (9) an einem am Lagerdom (3) vorgesehenen zweiten Anschlag (12) abstützt.

8. Rückstelleinheit (1) nach Anspruch 7,
**dadurch gekennzeichnet, dass**
an der ersten Lagereinheit (4) eine Aufnahmenut (11) vorgesehen ist, in welche der erste axiale Endabschnitt (8) der Torsionsfeder zur axialen Fixierung wenigstens teilweise aufnehmbar oder aufgenommen ist.

9. Rückstelleinheit (1) nach Anspruch 7 oder 8,
**dadurch gekennzeichnet, dass**
der zweite Anschlag (12) als ein in der axialen Richtung (A) der Rückstell-Konsole (2) vom Lagerdom (3) abstehender Fortsatz ausgebildet ist.

10. Rückstelleinheit (1) nach einem der vorhergehenden Ansprüche,
**dadurch gekennzeichnet, dass**
an der die ersten Lagereinheit (4) eine Schutzwand(15) umfasst vorgesehen ist, welche in einem in einer Brennkraftmaschine montierten Zustand der Rückstelleinheit (1) für diese als Auffangvorrichtung für von der Rückstelleinheit (1) abfallende Teile wirkt.

11. Rückstelleinheit nach einem der vorhergehenden Ansprüche,
**dadurch gekennzeichnet, dass**
die Rückstelleinheit (1) eine zweite, zusätzliche Lagereinheit (21) aufweist, welche die erste Lagereinheit (4) zu einer Lager-Baugruppe (22) ergänzt und welche eine zweite Aufnahmeöffnung (23) zur Aufnahme des Lagerdoms (3) aufweist, wobei der Lagerdom (3) in einem montierten Zustand im Bereich seines ersten axialen Endabschnitts seiner ersten Stirnseite in die erste Aufnahmeöffnung (5) der ersten Lagereinheit (4) und im Bereich seiner zweiten Stirnseite (17) seines zweiten axialen Endabschnitts in die zweite Aufnahmeöffnung (23) eingesetzt ist.

12. Brennkraftmaschine für ein Kraftfahrzeug,
- mit einer Ansaugvorrichtung zum Ansaugen von Luft in eine Brennkammer der Brennkraftmaschine,
- mit einer Rückstelleinheit (1) nach einem der vorhergehenden Ansprüche,
- mit einer drehfest mit dem Lagerdom (3) der Rückstelleinheit (1)verbundenen Klappen-Vorrichtung, mittels welcher eine Ansaugöffnung der Ansaugvorrichtung zwischen einem geöffneten und einem geschlossenen Zustand umschaltbar ist.

## Claims

1. A restoring unit (1), particularly for an internal combustion engine of a motor vehicle,
- with a restoring console (2) including a substantially cylindrical bearing dome(3),
- with a first bearing unit (4), including a first receiving opening (5), wherein the bearing dome (3) is rotatably inserted into the first receiving opening about an axis of the restoring console,
- with a spring element (6) arranged at least partially on an outer circumferential face (7) of the bearing dome (3) and wherein the restoring console (2) is preloaded via the spring element against the first bearing unit (4),
- wherein the bearing dome(3) is detachably arranged in the first receiving opening (5) via a clip connection, and
- wherein the clip connection includes a radial through-slot (14), which is disposed on a first face side(13) of the bearing dome (3) facing the first receiving opening (5),
**characterized in that** the bearing dome(3) has a console bearing face(25) extending at least partially in the circumferential direction, the console bearing facing mounting the restoring console (2) within the first bearing unit(4).

2. The restoring unit (1) according to claim 1,
**characterized in that**
the through-slot (14) is arranged in a region of the console bearing face(25).

3. The restoring unit according to one of the preceding claims,
**characterized in that**
the bearing dome further includes a stop (26) arranged between the console bearing face (25) and the outer circumferential face (7), wherein the stop prevents further insertion of the bearing dome (3) into the first receiving opening (5).

4. The restoring unit (1) according to one of the preceding claims,
**characterized in that**
the through-slot (14) includes a detent element on the first face side of the bearing dome, in particular a detent nose, for detachably securing the restoring console(2) in the first receiving opening (5).

5. The restoring unit (1) according to one of the preceding claims,
**characterized in that**
on the bearing dome(3) a rotary shaft through-opening (16) is provided, configured to receive a rotary shaft (24) at least partially and in a torque-proof manner for a torque-proof connection of the restoring console(2) with a valve device.

6. The restoring unit (1) according to claim 5,
**characterized in that**
the rotary shaft through-opening (16) is constructed as an inner square opening.

7. The restoring unit(1) according to one of the preceding claims,
**characterized in that**
the spring element (6) is constructed as a spring-elastic torsion spring, wherein the spring-elastic torsion spring in a mounted state is supported with a first axial end section (8) on a first stop (10) disposed on the first bearing unit (4) and is supported with a second axial end section (9) on a second stop (12) disposed on the bearing dome (3).

8. The restoring unit (1) according to claim 7,
**characterized in that**
the first bearing unit (4) further includes a receiving groove (11) and wherein the first axial end section (8) of the torsion spring is at least partially arranged in the receiving groove in the mounted state for axially fixing securing the torsion spring.

9. The restoring unit (1) according to claim 7 or 8,
**characterized**
**in that** the second stop (12) includes an extension projecting outwardly from the bearing dome (3) in an axial direction (A) of the restoring console (2).

10. The restoring unit (1) according to one of the preceding claims,
**characterized in that**
the first bearing unit (4) further includes a protective wall wherein the protective wall in a mounted state defines a collecting device for retaining falling pieces from the restoring unit (1).

11. The restoring unit according to one of the preceding claims,
further comprising a second bearing unit (21) disposed at a second face side of the bearing dome opposite the first bearing unit (4), the first bearing unit and the second bearing unit together defining a bearing assembly (22) wherein the second bearing unit includes a second receiving opening (23) for receiving the bearing dome (3), and wherein the bearing dome (3) in a mounted state has a first axial end section of the first face side arranged in the first receiving opening (5) of the first bearing unit (4) and a second face side (17) of the second axial end section arranged in the second receiving opening (23) of the second bearing unit.

12. An internal combustion engine for a motor vehicle,
- with an intake device for air intake into a combustion chamber
- with a restoring unit (1) according to one of the preceding claims integrated into the intake device,
- with a valve device connected in a torque-proof manner with the bearing dome (3) of the restoring unit (1), wherein the valve device is switchable in an intake opening of the intake device between an opened state and a closed state.

## Revendications

1. Unité de rappel (1), en particulier pour un moteur à combustion interne d'un véhicule automobile,
- avec une console de rappel (2) présentant un dôme de palier (3) réalisé de manière sensiblement cylindrique,
- avec une première unité de palier (4), qui présente une première ouverture de réception (5), dans laquelle le dôme de palier (3) est inséré de manière à pouvoir tourner,
- avec un élément de ressort (6), qui est disposé au moins en partie sur une surface périphérique extérieure (7) du dôme de palier (3) et qui précontraint la console de rappel (2) contre la première unité de palier (4),
- dans laquelle le dôme de palier (3) est inséré de manière amovible dans la première ouverture de réception (5) au moyen d'un système d'assemblage par clipsage, et
- dans laquelle le système d'assemblage par clipsage comprend une entaille de passage (14) radiale, qui est prévue sur un premier côté frontal (13) tourné vers la première ouverture de réception (5), du dôme de palier (3),
**caractérisée en ce**
**que** le dôme de palier (3) dispose d'une surface de palier de console (25), au moyen de laquelle la console de rappel (2) est montée à l'intérieur de la première unité de palier (4).

2. Unité de rappel (1) selon la revendication 1,
**caractérisée en ce**
**que** l'entaille de passage (14) est disposée dans la zone de la surface de palier de console (25).

3. Unité de rappel selon l'une quelconque des revendications précédentes, **caractérisée en ce**
**qu'**est disposée, entre la surface de palier de console (25) et la surface périphérique extérieure (7), une butée (26) qui délimite la pénétration du dôme de palier (3) dans la première ouverture de réception (5).

4. Unité de rappel (1) selon l'une quelconque des revendications précédentes, **caractérisée en ce**
**que** l'entaille de passage (14) comprend, au niveau du premier côté frontal du dôme de palier, un élément d'enclenchement, en particulier un ergot d'enclenchement, servant à fixer de manière amovible la console de rappel (2) dans la première ouverture de réception (5).

5. Unité de rappel (1) selon l'une quelconque des revendications précédentes, **caractérisée en ce**
**qu'**est prévue, au niveau du dôme de palier (3), une ouverture de passage d'arbres de rotation (16), dans laquelle un arbre de rotation (24) servant à assembler de manière solidaire en rotation la console de rappel (2) à un dispositif à volet peut être logé ou est logé au moins en partie et de manière solidaire en rotation.

6. Unité de rappel (1) selon la revendication 5,
**caractérisée en ce**
**que** l'ouverture de passage d'arbres de rotation (16) est réalisée sous la forme d'une ouverture à carré creux.

7. Unité de rappel (1) selon l'une quelconque des revendications précédentes, **caractérisée en ce**
**que** l'élément de ressort (6) est réalisé sous la forme d'un ressort de torsion élastique qui, dans un état monté dans l'unité de rappel (1), prend appui par une première section d'extrémité (8) axiale, au niveau d'une première butée (10) prévue au niveau de la première unité de palier (4) et qui prend appui par une deuxième section d'extrémité (9) axiale, au niveau d'une deuxième butée (12) prévue au niveau du dôme de palier (3).

8. Unité de rappel (1) selon la revendication 7,
**caractérisée en ce**
**qu'**est prévue, au niveau de la première unité de palier (4), une rainure de réception (11), dans laquelle la première section d'extrémité (8) axiale du ressort de torsion peut être logée ou est logée au moins en partie aux fins du blocage axial.

9. Unité de rappel (1) selon la revendication 7 ou 8,
**caractérisée en ce**
**que** la deuxième butée (12) est réalisée sous la forme d'un prolongement dépassant du dôme de palier (3) dans la direction axiale (A) de la console de rappel (2).

10. Unité de rappel (1) selon l'une quelconque des revendications précédentes,
**caractérisée en ce**
**qu'**est prévue, au niveau de la première unité de palier (4), une paroi de protection (15), qui agit, dans un état de l'unité de rappel (1) montée dans un moteur à combustion interne, pour cette dernière, comme un dispositif de récupération pour des parties tombant de l'unité de rappel (1).

11. Unité de rappel selon l'une quelconque des revendications précédentes,
**caractérisée en ce**
**que** l'unité de rappel (1) présente une deuxième unité de palier (21) supplémentaire, qui complète la première unité de palier (4) pour former un module de paliers (22) et qui présente une deuxième ouverture de réception (23) servant à recevoir le dôme de palier (3), dans laquelle le dôme de palier (3) est inséré, dans un état monté, dans la zone de sa première section d'extrémité axiale de son premier côté frontal, dans la première ouverture de réception (5) de la première unité de palier (4) et, dans la zone de son deuxième côté frontal (17) de sa deuxième section d'extrémité axiale, dans la deuxième ouverture de réception (23).

12. Moteur à combustion interne pour un véhicule automobile,
- avec un dispositif d'aspiration servant à aspirer de l'air dans une chambre de combustion du moteur à combustion interne,
- avec une unité de rappel (1) selon l'une quelconque des revendications précédentes,
- avec un dispositif à volet relié de manière solidaire en rotation au dôme de palier (3) de l'unité de rappel (1), au moyen duquel une ouverture d'aspiration du dispositif d'aspiration peut être commutée entre un état ouvert et un état fermé.
